# EUROPEAN PATENT APPLICATION

(11) **EP 4 703 292 A1**
(43) Date of publication of application: **04.03.2026**
(21) Application number: 24196841.1
(22) Date of filing: 27.08.2024
(51) Int. Cl.: B65G 1/04, B65G 65/00, G07F 11/04

(54) **AN AUTOMATED STORAGE AND RETRIEVAL SYSTEM**

(71) Applicant: AutoStore Technology AS, 5578 Nedre Vats (NO)
(72) Inventor: IVARJORD, Åsmund, 5578 Nedre Vats (NO); JAKOBSEN, Jonas Neraal, 5578 Nedre Vats (NO)
(74) Representative: Kilburn & Strode LLP

(57) **Abstract**

The disclosure relates to an automated storage and retrieval system comprising a frame and a vending apparatus. The frame defines a plurality of storage columns for receiving stacks of storage containers. The vending apparatus is arranged to automatically dispense a portion of content stored in a dispensing storage container in a first stack of storage containers from an opening of the dispensing storage container.

## Description

### TECHNICAL FIELD

The disclosure relates to an automated storage and retrieval system. More particularly, it relates to an automated storage and retrieval system comprising a vending apparatus, a method of dispensing content from an automated storage and retrieval system and a stackable container for automatically dispensing content.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

In some automated storage and retrieval systems, goods are manually picked and packed at ports. For instance, a human user may be at the ports to remove goods from and/or deposit goods into containers delivered thereto. However, manually handling items can be inefficient and requires continuous human presence. It would therefore be advantageous to provide apparatuses, systems and methods which can address drawbacks with manual picking and packing.

Some warehouses use A-frame automatic dispensers to partially automate the packing process. A-frame automatic dispensers - or A-frames for short - buffer and dispense goods so goods can be collated to fulfil orders. A-frames include slanted, off-vertical channels, from which goods are dispensed into a central conveyor for manual picking and packing. Each A-frame channel can hold a different type or category of goods such that different items can be dispensed onto the same central collector. The slanted channels straddle the central collector and meet above the central connector.

However, A-frame channels can only receive specific and regular packing sizes and shapes. Therefore A-frames are most suitable for packing consistently shaped goods and are not suitable for inconsistently shaped goods. In addition, A-frame channels have limited capacity, require intermitted refilling and can only service goods of limited size and weight. For these reasons, A-frames are mainly used for pharmaceutical goods, which are light and have consistent packaging shapes. A-frames may not be suitable for other categories of goods.

Other automated storage and retrieval systems use robot piece picking. Robot piece picking involves replacing a human operator at picking and packing ports with an extensible robotic arm comprising a gripper. However, robot piece picking can be ineffective because robotic arms lack precision for handling a variety of products. In addition, robot piece picking involves picking goods from and packing goods into containers at ports and, as such, can include many of the same inefficiencies as manual picking.

It would therefore be advantageous to provide improved apparatuses, systems and methods which can address the drawbacks with previous automated picking and packing solutions.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows an example automated storage and retrieval system including a vending apparatus;
Fig. 6A shows a section of another example automated storage and retrieval system including a vending apparatus;
Fig. 6B shows a section of the storage system shown Fig. 6A;
Fig. 7 shows a section of another example automated storage and retrieval system including a vending apparatus in a port or a port column;
Fig. 8 shows a section of another example automated storage and retrieval system including a vending apparatus;
Fig. 9 shows a stackable container for automatically dispensing content;
Fig. 10A shows a perspective view of a stackable container and an example vending apparatus;
Fig. 10B shows a side view of the stackable container and vending apparatus of Fig. 10A;
Fig. 11 shows a stackable container and another example vending apparatus;
Fig. 12A shows a perspective view of a stackable container for receiving and dispensing irregularly shaped content;
Fig. 12B shows another perspective view of the stackable container of Fig. 12A; and
Fig. 13 shows a flowchart of an example method of automatically dispensing content from an automated storage and retrieval system.

### DETAILED DESCRIPTION

In overview, the disclosure relates to an automated storage and retrieval system (also referred to as a storage system) which includes a vending apparatus arranged to automatically (i.e., without human intervention) dispense content from a storage container stored in the storage system. In particular, the vending apparatus is arranged to automatically dispense content from an opening of the storage container. The opening of the storage container may be provided in a sidewall or base of the storage container. By using a vending apparatus to automatically dispense content, items can be dispensed from within the storage system, without human involvement. Dispensing items from within the storage system - i.e., without requiring that a storage container be transported about the storage system or to a user-accessible pick-up port in the storage system - can allow items to be dispensed more efficiently by avoiding additional time associated with: transporting the containers; bottlenecks at the port when picking items from multiple storage container; manual picking. In some examples of the disclosure, the vending apparatus is arranged to dispense a portion of the content, which may be a predetermined portion of the content, such as an integer number of stock keeping units (SKUs), to allow the quantity of dispensed content to be controlled. As such, systems of the present disclosure can allow accurate and efficient order fulfilment.

In some examples of the disclosure, the vending apparatus is arranged to dispense content onto a transporter. The transporter may be arranged to transport the dispensed content to a user-accessible location. In addition, multiple vending apparatuses may respectively dispense content onto the same transporter. By doing so, complex orders including multiple different items (i.e., multiple items stored in different containers in the storage system) can be efficiently fulfilled by collating the respective items on the transporter. Once collated, the items can be transported to a user-accessible location. Similarly, in some examples of the disclosure, the vending apparatus is arranged to dispense content into a receptacle storage container in a storage column of the grid. For instance, the receptacle storage container may be stored in an adjacent column to the dispensing storage container. Content can therefore be dispensed directly from the dispensing storage container into the receptacle storage container (e.g., through a top opening thereof). Accordingly, goods can be dispensed from multiple dispensing storage containers (e.g., dispensing storage containers containing different types of goods) into the receptacle storage container. Goods are collated at the receptacle storage container, which can then be transported to a port for manual picking. In all these examples, the dispensing storage container can provide further improvements to order fulfilment efficiency.

### Automated storage and retrieval system overview

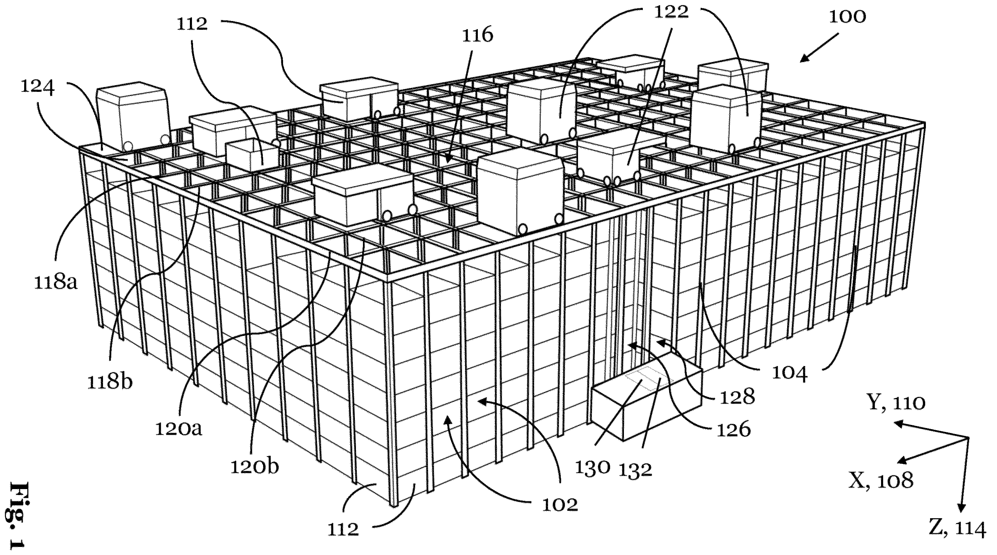

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

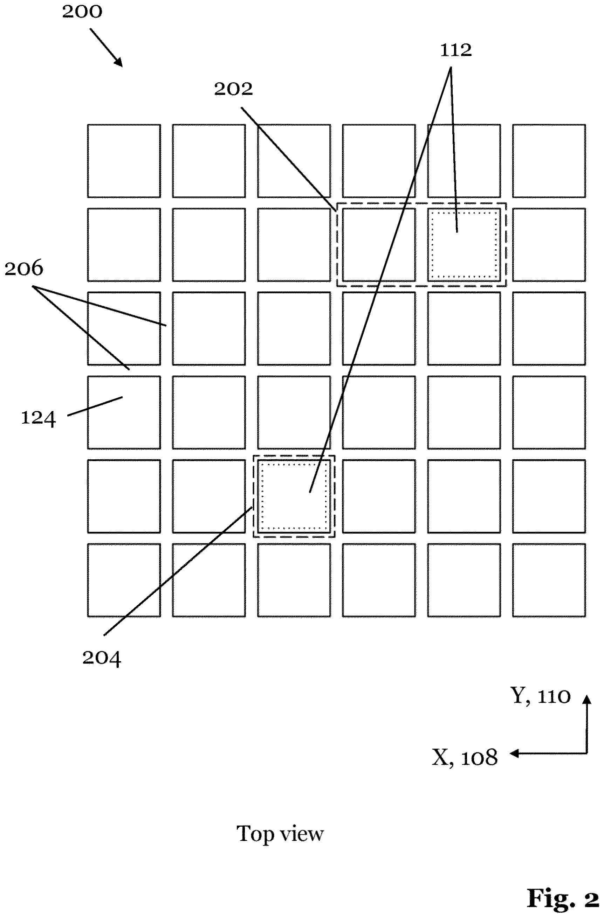

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

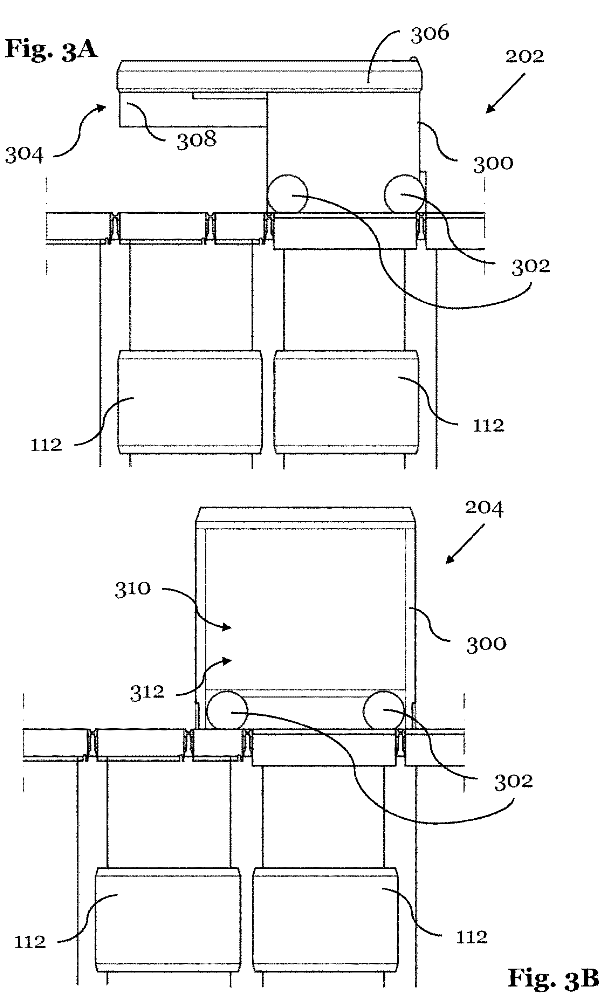

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

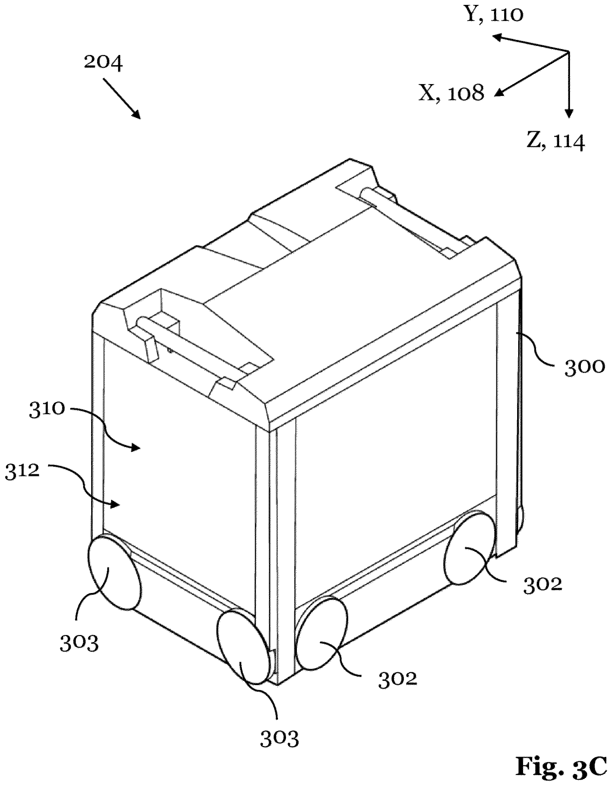

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

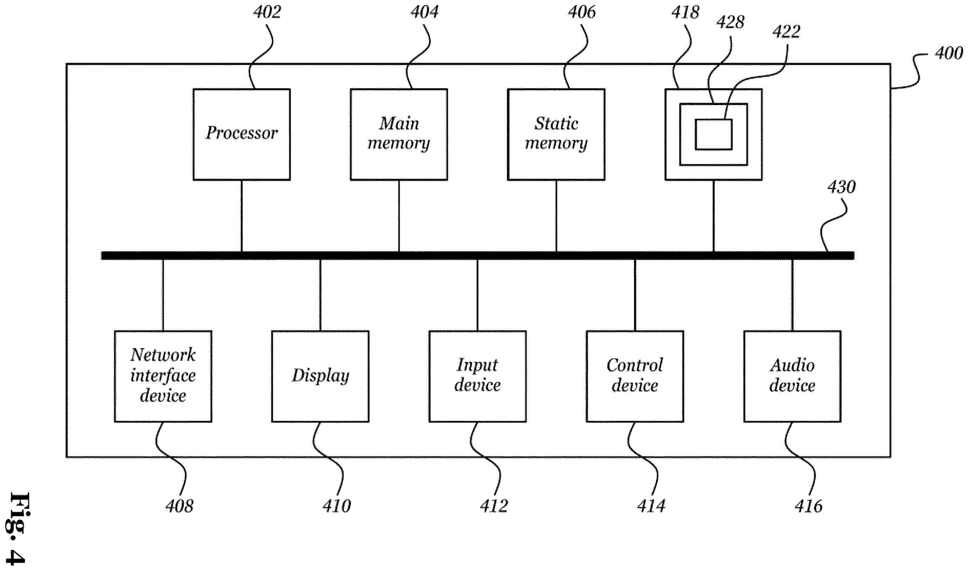

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Improved automatically dispensing storage systems

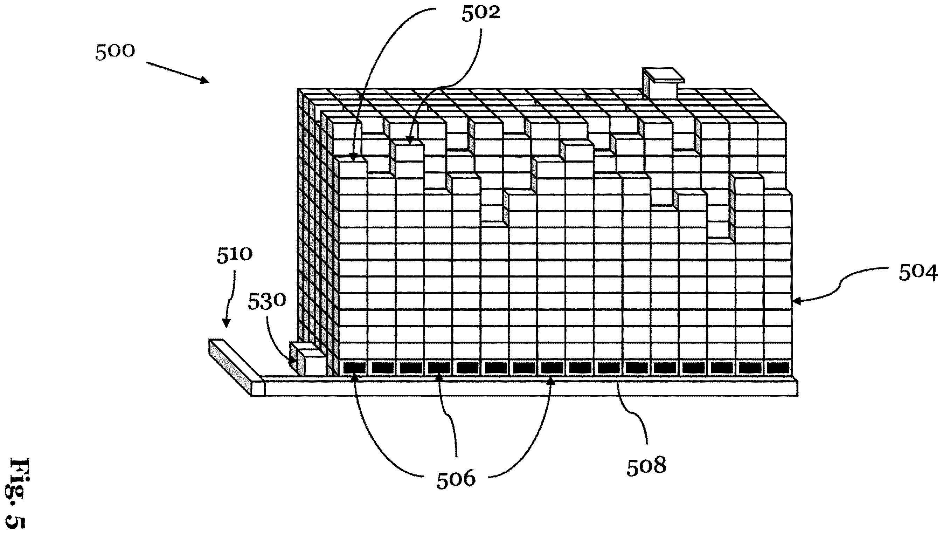

Figs. 5-8 show schematic automated storage and retrieval systems 500, 600, 700, 800 (also referred to as storage systems for short), or sections thereof, according to the present disclosure. Unless otherwise stated, each storage system may be generally as described with respect to Figs. 1-4. For instance, the storage system includes a frame defining a plurality of storage columns 502, 602, 702, 802 for receiving stacks of storage containers. For convenience of illustration, Figs. 5-8 do not explicitly depict the frame.

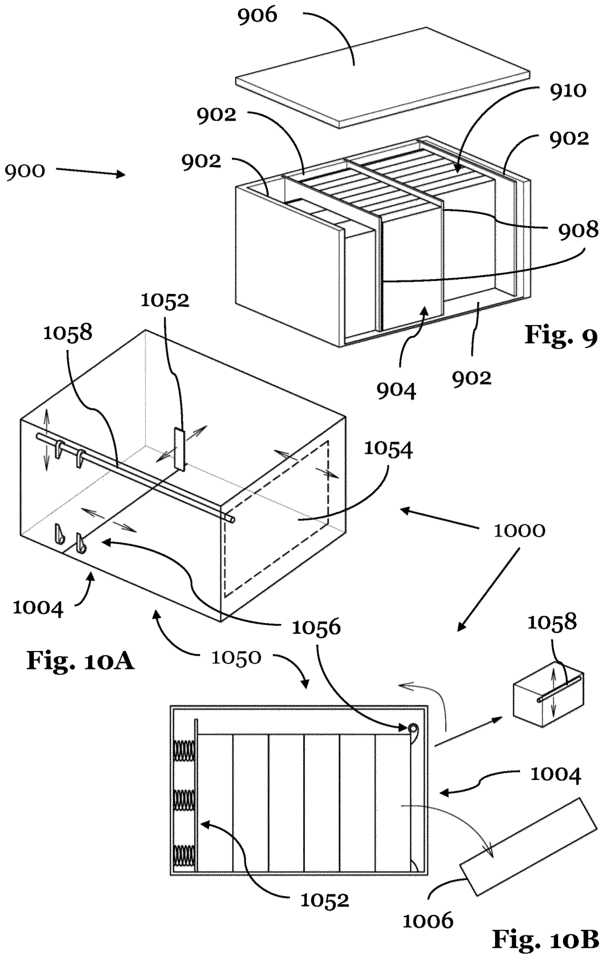

The storage systems shown in Figs. 5-8 also include a vending apparatus. The vending apparatuses of each of Figs. 5-8 are not mutually exclusive and may be provided jointly. The vending apparatus is arranged to automatically dispense a portion of content stored in a dispensing storage container. The dispensing storage container maybe stored in a stack of storage containers in any of the storage columns 502, 602, 702, 802. In particular, the vending apparatus is arranged to dispense a portion of content stored in a storage container which is suitable for automatically dispensing content therefrom. Such storage containers are referred to herein as dispensing storage containers and may be as described with respect to the storage containers of Figs. 9-12B.

For instance, as described with respect to Fig. 9, the storage container may include an opening in, for instance, a gated face of the storage container. The opening may be provided in the sidewall or base of the storage container. As such, the vending apparatus may be arranged to automatically dispense a portion of content stored in the dispensing storage container via its opening. In other words, the vending apparatus may be arranged to push, urge, or otherwise expel the portion of the content through the opening of the storage container. Example implementations of the vending apparatus and the cooperation between the vending apparatus and the storage container are described herein with respect to Figs. 10A-12B. For example, the vending apparatus may include a pusher arranged to urge the content towards the opening and/or a stopper disposable at the opening for selectively retaining the content in the dispensing storage container. The stopper may be a hinged stopper or a cover which may be translatable in the plane of the opening. One or more components of the vending apparatus may be provided in the dispensing container. The one or more components may comprise only mechanical components, such as any components without a power supply or power source.

Referring to the implementation depicted in Fig. 5, the vending apparatus may be disposed or positioned in the storage system to dispense content from dispensing storage containers which are received in storage columns 502 at an edge 504 of the frame. The storage columns at the edge 504 of the frame are those at the periphery of the frame when shown in top view. By positioning the vending apparatus to dispense content from dispensing storage containers at the edge 504 of the frame, the content can be efficiently dispensed outside the frame directly from the storage container.

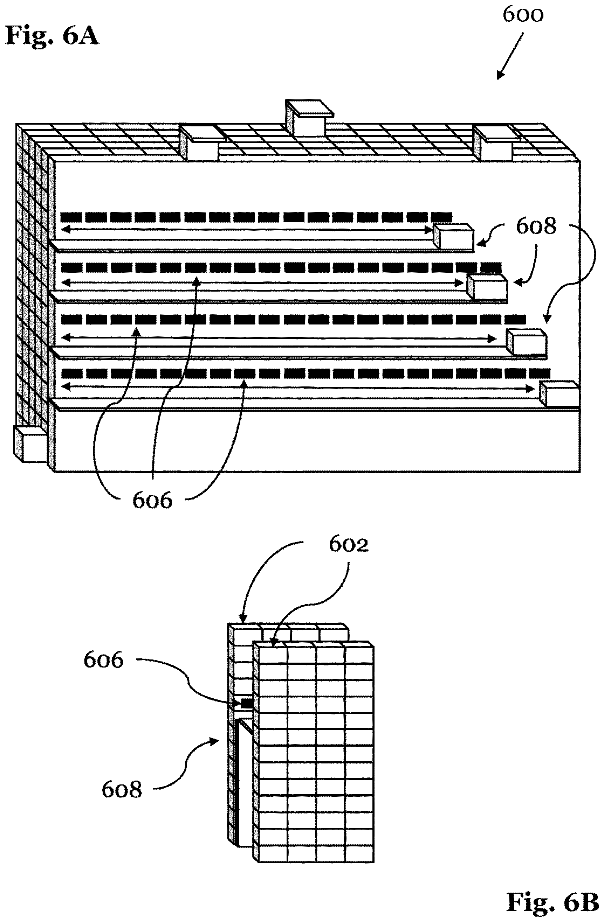

For instance, in some examples, the frame may comprise one or more dispensing outlets 506 and the vending apparatus may be arranged to dispense the portion of content through one of the dispensing outlet(s) 506. As shown in Fig. 5, the dispensing outlet(s) 506 may be positioned at the edge 504 of the frame and may be disposed substantially towards the bottom of the grid. However, in other embodiment, the dispensing outlet(s) 506 may be positioned at any height of the frame. Dispensing outlets may equally be positioned at multiple heights, as otherwise described herein with respect to Fig. 6a. The dispensing outlet(s) 506 may be disposed at a fixed position in the grid and therefore the portion of content may be dispensed from dispensing storage containers positioned in stacks relative to the respective dispensing outlet(s) 506. However, in other embodiments, the dispensing outlet may be movable about the grid. For instance, a dispensing outlet 506 may be installed on a gantry configured to reposition the dispensing outlet 506 about the grid (e.g., about the edge 504 of the grid). By repositioning the dispensing outlet 506, content can be dispensed from different dispensing storage containers in different storage columns 502 of the grid.

Each dispensing outlet 506 may comprise an outlet in the frame. The outlet is sized to allow content to pass through it. For instance, a dispensing outlet 506 may be disposed to align with the opening of a dispensing storage container when the dispensing storage container is received in a storage column. In these examples, when the vending apparatus dispenses a portion of content from an opening in the dispensing storage container, the portion of the content may sequentially pass through the opening in the dispensing storage container and through the dispensing outlet 506. In some implementations, the dispensing outlets may be provided as part of the vending apparatus. For instance, a stopper of the vending apparatus may be provided at the dispensing outlet 506. This stopper may take the form of any of the stoppers otherwise described herein. A stopper at the dispensing outlet 506 may, in some implementations, be provided in combination with any of the other stoppers described herein. For instance, a stopper may be provided at both the dispensing outlet 506 and an opening in a dispensing storage container.

In some implementations, the storage system 500 further comprises a transporter 508 and the vending apparatus is arranged to dispense the portion of the content onto the transporter 508. The transporter 508 may comprise any means suitable for transporting the dispensed content away from the vending apparatus and/or the frame. The transporter 508 may be arranged to collate content dispensed from a plurality of vending apparatuses and/or dispensing outlets 506.

For instance, as shown in Fig. 5, the transporter 508 may comprise a conveyor, such as a conveyor belt. In these examples, content is dispensed onto the conveyor, and the conveyor can transport the dispensed content to a remote packing station 510. The remote picking and/or packing station 510 may be at a user-accessible location which, for instance, may additionally include, or be near, a pick-up port 530.

The transporter 508 may comprise a receptacle storage container for receiving the dispensed content. For instance, a receptacle storage container may be disposed under each vending apparatus and/or dispensing outlet 506, for collection by a user. Alternatively, the receptacle storage container may be carried by the conveyor. When carried by the conveyor, the receptacle storage container may sequentially pass under multiple vending apparatuses and/or dispensing outlets 506. As the receptacle passes under the vending apparatuses and/or dispensing outlets, the receptacle may collect content dispensed therefrom.

The transporter may comprise a robotic vehicle, such as any robotic container-handling vehicle otherwise described herein or a receptacle robotic vehicle comprising a receptacle in which to collect the dispensed content. When the robotic vehicle is a robotic container handling vehicle, the robotic container handling vehicle may carry a receptacle storage container. In any implementation, the robotic vehicle may be programmed to travel between vending apparatuses and/or dispensing outlets 506 to respectively collect content disposed therefrom. The robotic vehicle may additionally be programmed to deposit the receptacle storage container at a user-accessible location, such as a pick-up port.

Multiple dispensing outlets 506 may each be provided to cooperate with respective dispensing containers stored in different storage columns of the grid. Each storage column may be designated for storage containers holding a particular item or type of item (e.g., items with different stock keeping units). Accordingly, each dispensing outlet 506 may be associated with a particular item, such that the vending apparatus at each dispensing outlet 506 is arranged to dispense the particular item. Each dispensing outlet 506 may dispense the particular item onto the transporter 508 as the transport passes the respective dispensing outlet 506. Accordingly, the dispensing outlets 506 and the transporters 508 described herein can efficiently collate content from multiple sources (e.g., multiple dispensing storage containers) and can thereby fulfil complex orders comprising items from the multiple sources in the storage system.

Referring to the implementation depicted in Figs. 6A and 6B, the vending apparatus may be disposed or positioned to dispense a portion of content from dispensing storage containers received in an interior zone of the frame. The interior zone of the frame comprises any of the storage columns which are not provided at an accessible edge of the frame. For instance, the interior zone of the frame comprises any storage columns which are recessed from the edge of the frame by at least one row of storage containers. Equally, an accessible edge may comprise any edge which abuts either a user accessible or empty area around the storage system. Accordingly, the interior zone of the frame also includes any storage containers at an edge of the frame which abut any user-inaccessible surrounding, such as a wall (in, for instance, the warehouse containing the storage system). In general, the interior zone of the frame substantially comprises at least the core of the storage grid.

In some examples where the vending apparatus may be disposed or positioned to dispense a portion of content from dispensing storage containers received in an interior zone of the frame, the frame may comprise one or more dispensing outlets 606. As will be appreciated, Fig. 6A shows a cross section of the storage system 600. When the frame comprises dispensing outlets 606 positioned to dispense content from an interior zone of the grid, further sections of the storage system containing further storage columns may be provided to oppose the dispensing outlets 606 shown in Fig 6A. In this way, the dispensing outlets 606 shown in Fig. 6A are disposed inside the frame - i.e., inside the storage system or within the storage grid. Dispensing outlets 606 being disposed inside the frame is further illustrated in Fig. 6B. Unless otherwise stated, the dispensing outlets 606 are as described herein with respect to Fig. 5. For instance, the dispensing outlets 606 may be disposed at a fixed position in the grid or may be movable, such as by a gantry. Equally, the dispensing outlets 606 may comprise an outlet in the frame and may be disposed to align with the opening of a dispensing storage container when the dispensing storage container is received in a storage column.

As further shown in Fig. 6A, dispensing outlets 606 may be distributed at different frame heights (i.e., vertical positions in the storage system). In particular, rows of dispensing outlets 606 may be disposed at the respective frame heights. As such, vending apparatuses may be disposed or positioned to dispense a portion of content from dispensing storage containers received at different heights in the interior zone of the frame. Accordingly, distributing dispensing outlets 606 at different frame heights can allow more flexible content dispensing from within the grid as content can be dispensed from multiple positions in the storage system. In addition, content can be dispensed more efficiently because content can be dispensed with less digging by the robotic vehicles.

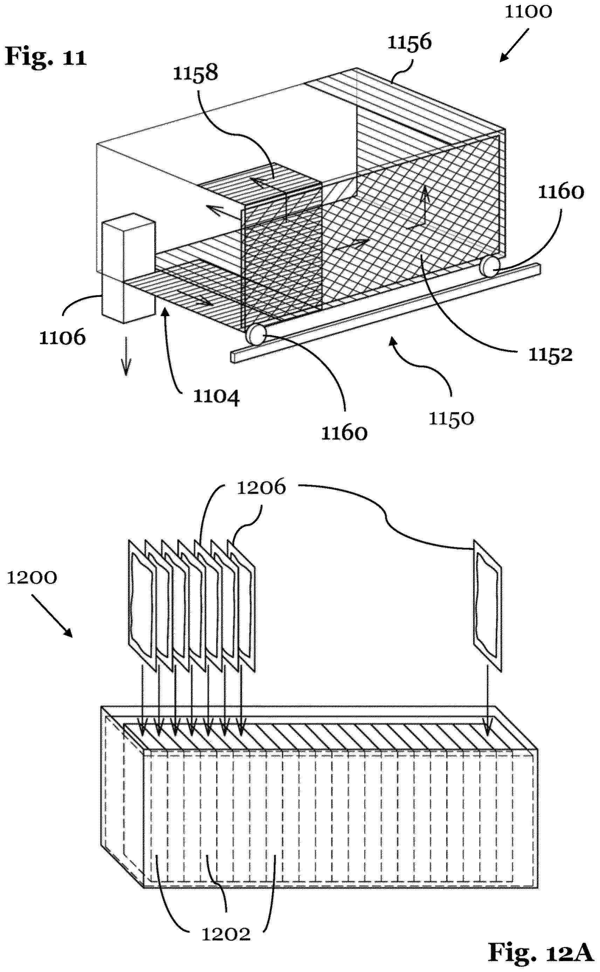

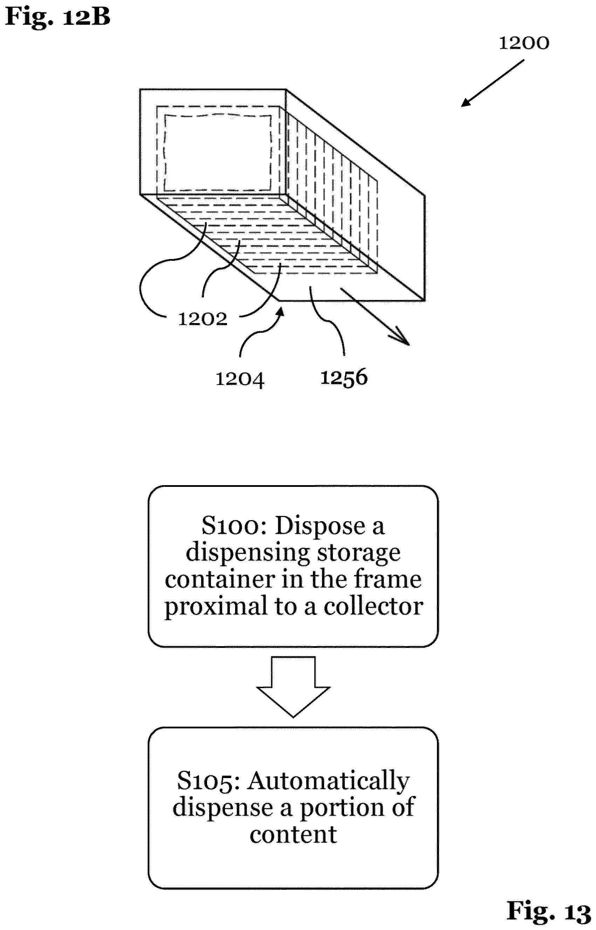

Further, when the vending apparatus is disposed or positioned to dispense a portion of content from dispensing storage containers received at different heights, the vending apparatus may be respectively arranged to dispense different types of items from each respective height. Different types of items may comprise items with different stock keeping units, dimensions (e.g., packaging dimension) and/or weights. For instance, the vending apparatus may be arranged to dispense irregularly shaped items from a cartridge, as described with respect to Figs. 12A or 12B at one height and the vending apparatus may be arranged to dispense regularly shaped items (for instance, as described with respect to Figs. 10A-11) from another height. Accordingly, disposing the vending apparatus to dispense a portion of content from different heights can allow greater variation in the types of items that can be automatically dispensed from the storage system.

As shown in Fig. 6A, the storage system 600 may additionally comprise at least one transporter 608. The transporters 608 of Fig. 6A may be as described with respect to the transporter 508 of Fig. 5. For instance, the transporter 608 may be arranged to collate content dispensed from a plurality of vending apparatuses and/or dispensing outlets 606. The transporter 608 may comprise a conveyor, receptacle storage container, robotic vehicle, or any combination thereof. As shown in Fig. 6, when the vending apparatus is disposed or positioned to dispense a portion of content from dispensing storage containers received at different heights, multiple transporters 608 maybe provided. Each transporter 608 maybe arranged to collate content dispensed from a plurality of vending apparatuses and/or dispensing outlets 606 at a respective frame height. For instance, each of the transporters may be arranged to collate content dispensed from higher vending apparatuses. In the embodiment shown in Fig. 6, four transporters 608 are provided to collate content dispensed from four respective rows of dispensing outlets 606. However, in other implementations any number of transporters may be provided.

As described herein, the dispensing outlets 606 may be disposed inside the frame. Accordingly, further sections of the storage system containing further storage columns to those shown in Fig. 6A may be provided facing to the dispensing outlets 606 and/or the transporters 608. For instance, as shown in Fig. 6B, opposing storage columns 602 may straddle a transporter 608. The opposing storage columns may be provided with dispensing outlets for dispensing content therethrough and onto the transporter 608. Accordingly, vending apparatuses in each opposing storage column 602 maybe arranged to dispense a portion of content in opposing directions. Disposing the dispensing outlets 606 inside the frame can allow content to be dispensed from more storage containers simultaneously, which can improve dispensing efficiency.

Furthermore, a storage system 600 with vending apparatuses in opposing storage columns that can dispense a portion of content therethrough onto a central transporter 608 maintains substantially rectilinear dimensions. This contrasts with previous A-frame automatic dispensers in which channels are slanted. As A-frame channels are slanted, the rectilinear extent of an A-frame is set by the width of its base which does not equal the width of its height. Therefore, the projected A-frame volume includes empty space. On the other hand, the storage systems 600 described herein have less empty space and can therefore utilise space more efficiently and include greater storage density.

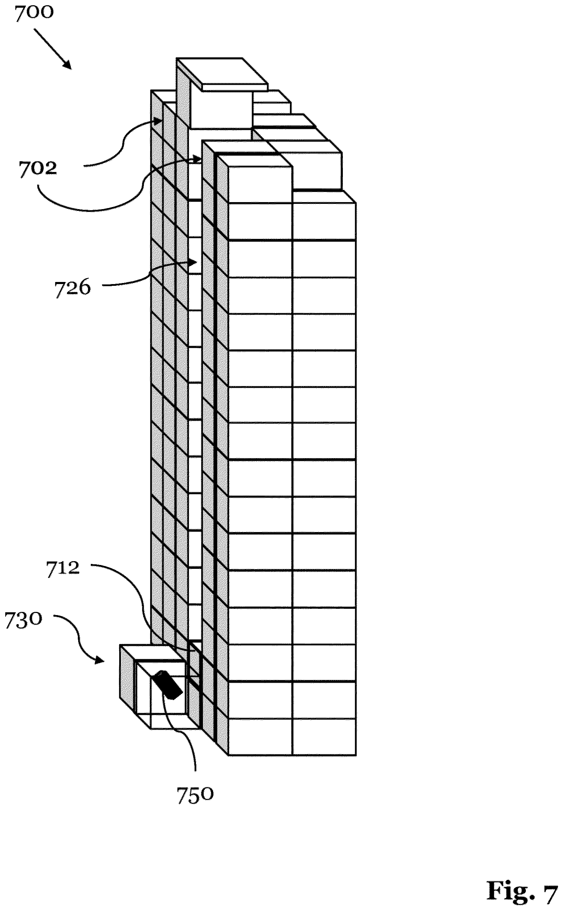

Referring to the implementation depicted in Fig. 7, the automated storage and retrieval system 700 may additionally include a port column 726. The port column is suitable for transporting a storage container to a port 730, as described in more detail with respect to the port columns 126, 128 of Fig. 1. Here, the vending apparatus may be disposed to dispense the portion of content from the dispensing storage container when the dispensing storage container is received in the port column 726 or the port 730.

When the vending apparatus is disposed to dispense content when the dispensing storage container is received in the port column 726, the vending apparatus maybe positioned at any vertical position in port column. As shown in Fig. 7, the vending apparatus may be disposed to dispense content when a dispensing storage container 712 is received at a vertical position in the port column 726 at or above the port 730. In these examples, content can be dispensed easily from the dispensing storage container 712 and into the port 730, e.g., via gravity.

Independent of vending apparatus positioning, the vending apparatus may be arranged to dispense content from the dispensing storage container 712 in response to the dispensing storage container passing through the port column 726. For instance, the vending apparatus may include a mechanical dispensing mechanism (e.g., as described with respect to Figs. 10A-11) arranged to automatically dispense the content from the storage container 712 in response to the dispensing storage container 712 passing through the port column 726 or the dispensing storage container 712 passing the vending apparatus. In some examples, a kinetic impact at the dispensing storage container 712 may trigger the vending apparatus to dispense content from the dispensing storage container 712. For example, the kinetic impact may include the force of lowering the dispensing storage container 712 to the base of the port column or lowering a further container onto the dispensing storage container 712.

The content may be dispensed from the dispensing storage container 712 in the port column 726 into the port 730. For instance, as shown in Fig. 7, portion of content 750 is dispensed from the dispensing storage container 712 received in the port column 726 and into the port 730. The port 730 in Fig. 7 is depicted schematically as two blocks, one of which is transparent, for illustrative purposes. As otherwise described herein, the port 730 may be provided at a user-accessible location. Once the portion of content 750 is dispensed into the port 730, a user may collect the dispensed content 750 from the port.

The vending apparatus may be disposed in the port 730. Accordingly, the dispensing storage container may be lowered through the port column 726 and transported into the port 730, as described with respect to Figs. 1-4. Once in the port, the vending apparatus may dispense the content from the dispensing storage container into an access receptacle (e.g., a user-accessible vessel in the port) for picking therefrom by a user.

In some implementations, a receptacle storage container may be positioned at the port when the portion of content 750 is dispensed from the dispensing storage container 712. Here, the portion of content 750 may be dispensed into the receptacle storage container. Different types of items can therefore be collated at the receptacle storage container, e.g., to fulfil complex orders efficiently. For instance, multiple dispensing storage containers 712 may be sequentially received in the port column 726 or the port 730, each of which may dispense content into the receptacle storage container.

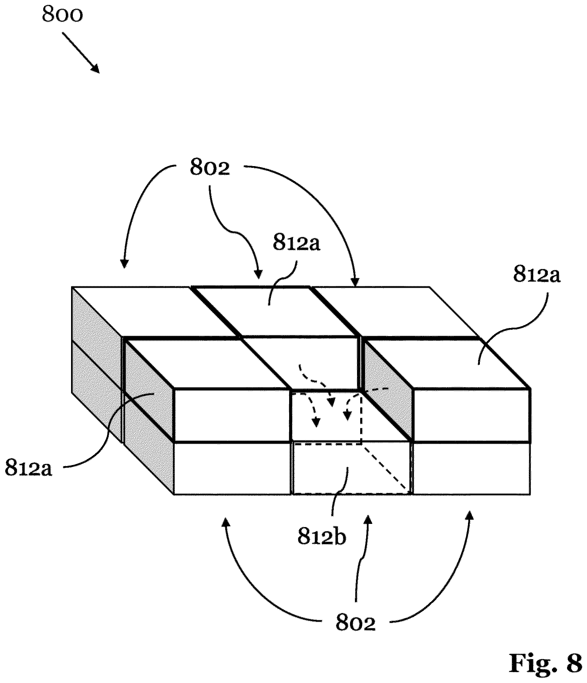

Referring to the implementation depicted in Fig. 8, the vending apparatus maybe arranged to dispense the portion of the content from one or more dispensing storage containers 812a into a receptacle storage container 812b. Fig. 8 shows storage containers in six neighbouring storage columns 802 in a section of a storage system 800. As shown, a subset of the storage columns includes dispensing storage containers 812a. One of the shown storage columns includes a receptacle storage container 812b. The receptacle storage container 812b may take the form of any of the bins or storage containers described herein. In particular, the receptacle storage container 812b is arranged to receive goods for storage therein, for instance through an opening in the top or side thereof. The receptacle storage container 812b may otherwise comprise a dispensing storage container and, as such, may further include an opening in its side and/or base.

As shown in Fig. 8, the receptacle storage container 812b may be disposed in an adjacent stack of storage containers to the stack(s) which include the dispensing storage container(s) 812a. Accordingly, the vending apparatus is arranged to automatically dispense content from an opening of the dispensing storage container(s) 812a which face the receptacle storage container 812b. Such an opening is not depicted in Fig. 8 for simplicity. For instance, the opening which faces the receptacle storage container 812b may be an opening at the shared side of the storage column containing the receptacle storage container 812b and the storage column containing the dispensing storage container(s) 812a. Accordingly, when content is automatically dispensed from the opening facing the receptacle storage container, the content passes into the receptacle storage container.

In some examples, such as shown in Fig. 8, the receptacle storage container 812b is the uppermost storage container in its storage column 802. In these examples, the receptacle storage container 812b may be disposed at a lower vertical position in the grid than the vertical position of the dispensing storage container(s) 812a. Accordingly, when the portion of the content is dispensed from the dispensing storage container(s) 812a, the portion of the content can fall unobstructed and under gravity into the respective storage column 802.

Equally, the receptacle storage container 812b may be disposed at the same vertical level in the grid as the dispensing storage container(s) 812a. In these examples, an opening may be provided in the sidewall of the receptacle storage container 812b. As an example, the opening may be as described herein with respect to the opening of a dispensing storage container. Accordingly, the portion of the content can be dispensed directly from the dispensing storage container(s) 812a and into the receptacle storage container 812b, via the opening of the dispensing storage container(s) 812a and the opening of the receptacle storage container 812b.

In alternative embodiments, an opening may be provided in the base of the dispensing storage container(s) 812a. Accordingly, the receptacle storage container 812b may be provided directly underneath, and in the same stack as, the dispensing storage container 812a. Accordingly, the portion of the content may be dispensed directly from the base of the dispensing storage container 812a and into the receptacle storage container 812b, while in the same stack as each other.

Robotic container-handling vehicles may be arranged to cycle dispensing storage containers 812a about the receptacle storage container 812b. That is, the robotic container-handling vehicles may transport a first dispensing storage container 812a to dispense a portion of its content into the receptacle storage container 812b. Then, once the content is dispensed from the first dispensing storage container 812a, the robotic container-handling vehicles may transport the first dispensing storage container 812a away from the receptacle storage container 812b and transport a second dispensing storage container 812a to the receptacle storage container 812b to dispense a portion of its content into the receptacle storage container 812b. Robotic container-handling vehicles are arranged to cycle dispensing storage containers 812a about the receptacle storage container 812b in any of the embodiments described herein (e.g., when the portion of the content can fall unobstructed and under gravity into the respective storage column 802, when the portion of the content can be dispensed directly from the dispensing storage container(s) 812a and into the receptacle storage container 812b, and when the portion of the content may be dispensed directly from the base of the dispensing storage container 812a and into the receptacle storage container 812b). In this way, items stored in different respective dispensing storage containers 812a can be efficiently collated at a receptacle storage container 812b. The receptacle storage container 812b can then be transported to a port to provide efficient fulfilment of complex orders.

The receptacle storage container 812b may also be a dispensing storage container 812a (such as the container described herein with respect to Fig. 9). Accordingly, once different types of items are collated in the receptacle storage container, the receptacle storage container 812b may be transported to a vending apparatus arranged to dispense the items from the receptacle storage container 812b to a transporter and/or a user-accessible location. Complex orders can thereby be fulfilled efficiently.

### Dispensing storage containers

Fig. 9 shows a stackable container 900 for automatically dispensing content 910 according to the present disclosure. In other words, content 910 can be automatically dispensed from a stackable container 900. The stackable container 900 may also be referred to as a dispensing storage container. Unless otherwise specified, the stackable container 900 may correspond to the bins 112 described with respect to Fig. 1. For instance, the stackable container 900 may include an ingress opening at its top, as shown, to allow content to be picked and packed therefrom.

As shown, the stackable container 900 includes a plurality of internal surfaces 902 and a gated face 904 forming an internal storage space therebetween. The internal storage space is suitable for robustly holding content 910 inside the stackable container 900. Accordingly, the internal surfaces 902 and the gated face 904 are arranged to retain content 910 in the internal storage space. As shown in Fig. 9, the internal surfaces 902 may comprise sidewalls and a base of the storage container 900, and the gated face 904 may comprise another sidewall of the storage container. In other examples, the internal surfaces 902 may comprise the sidewalls and the gated face 904 may comprise the base. In some examples, multiple gated faces 904 may be provided, on multiple sidewalls or at least one sidewall and the base.

The gated face 904 includes an opening arranged to act as an egress from the internal storage space. In other words, the gated face is arranged to provide a path through which content 910 stored in the internal storage space can pass when content 910 is dispensed from the internal storage space. The gated face 904 is gated to selectively retain the content 910 in the stackable container 900. Accordingly, when the container 900 is transported around the grid, such as by the robots, the gated face is arranged to retain the content 910 in the internal storage space to prevent content 910 escaping the bin unintentionally. On the other hand, when content is to be dispensed from the storage container, the gated face allows the content 910 to be released therethrough.

For instance, the stackable container may include a stopper 906 which can be disposed at the opening in the gated face 904. As shown in Fig. 9, the stopper 906 may comprise a cover which is translatable across the opening. For instance, the cover may be arranged to sit in the opening until it is translated by a vending apparatus in the storage system and/or the stackable container 900. Alternatively, the stopper may comprise a lip or flange. The stopper may not be translatable or rotatable, in which case a vending apparatus may be arranged to release content 910 through the gated face 904 by transferring the content 910 around the stopper.

In some implementations, the internal storage space may house dividers 908 for segregating sections of the internal storage space. Each respective section may be suitable for storing and sized to store items of different types (e.g., of different SKUs, dimensions, or weights). As such, different types of items can be dispensed from the stackable container 900 by a vending apparatus, according to the sizes of the sections in the internal storage space.

As discussed in more detail with respect to Figs. 12A and 12B, the stackable storage container may further include cartridges for storing portions of the content, particularly when the portion of the content take an irregular shape. For instance, the content may be clothing which is mouldable into many irregular shapes. Each cartridge may be arranged to receive a set quantity of the content. The cartridge may be arranged to be dispensed from the stackable container 900 by the vending apparatus. Alternatively, the vending apparatus may be arranged to dispense the content of the cartridge from the stackable container 900. By including cartridges therefore, the stackable storage container may allow for irregular items to be dispensed automatically.

### Example vending apparatuses

Figs. 10A-12B show example vending apparatuses and the interaction between stackable containers and the vending apparatuses. Components of the vending apparatus are depicted as being present in the stackable containers. However, some or all the components of the vending apparatus may not be provided in the stackable containers. Instead, the components of the vending apparatus may be provided independently of the stackable container in the storage system. Accordingly, the vending apparatus may be arranged to engage the stackable container when the stackable container is disposed proximal to the vending apparatus. For instance, some components, such as stoppers, may be provided in a dispensing outlet in the grid. Other components, such as pushers, may be disposed in a storage cell to be deployed, from the storage cell, into the dispensing storage container, e.g., in response to the storage container being disposed in the storage cell. In some examples, some of the components of the vending apparatus are provided in the stackable container, such as components which are mechanically actuated (e.g., components which are not electrically actuated or coupled to a power source).

Fig. 10A shows a stackable container 1000 with an example vending apparatus 1050 in perspective view. Fig. 10B shows the stackable container 1000 and vending apparatus 1050 in side view. The vending apparatus includes a pusher 1052. The pusher is arranged to urge (i.e., push or otherwise mechanically bias) the content towards the opening 1004 of the stackable container. For instance, as shown in Fig. 10A and Fig 10b, the pusher may urge the content in a direction substantially perpendicular to the plane of the opening so the content is biased against the opening, or a stopper thereat. Alternatively, for instance if the opening is towards an edge of the gated face, the pusher may urge the content in a direction substantially parallel to the plane of the opening. Urging the content in a direction substantially parallel to the plane of the opening acts to present the content in view of the opening. The vending apparatus 1050 may include a second pusher 1054 so the content can be urged to both present the content in line with the opening and to bias the content against the opening or a stopper thereat. For instance, the vending apparatus 1050 shown in Fig. 10A includes a second pusher 1054 arranged to urge the content in a direction substantially parallel to the plane of the opening. The pusher may comprise any suitable means for urging the content such as a resilient bias means such as a spring, a mechanical biaser such as a hydraulic piston or hydraulic spring, and/or a motor.

The vending apparatus 1050 shown in Figs. 10A and 10B further comprises a stopper 1056. As shown in Figs. 10A and 10B, the stopper 1056 may comprise a set of stopper components respectively disposed at opposite edges of the opening. More generally, the stopper components may respectively be disposed at different edges of the opening.

The stopper 1056 of the vending apparatus 1050 is disposable at the opening 1004 for selectively retaining the content in the storage container 1000. Accordingly, the stopper 1056 can be transitioned between a closed position and an open position. In the closed position, the stopper 1056 is arranged to retain the content in the dispensing storage container. For instance, in the closed position, the stopper 1056 may mechanically prevent content from exiting the storage container. In the open position, the stopper 1056 is arranged to release the content from the dispensing storage container. For instance, in the open position, the stopper 1056 may be positioned to allow content to exit the storage container. The stopper 1056 may considered in an open position when it is translated or pivoted away from the opening 1004.

Accordingly, when the stopper is in the open position, an item or a portion of the content stored in the storage container 1000 may be urged out of (and therefore dispensed from) the storage container, via the opening. This is shown with respect to portion of content 1006 in Fig. 10B. As otherwise described herein, the item or portion of the content may comprise a single, or integer number of, stock keeping units. To accurately dispense a set amount of content (e.g., a set number of stock keeping units, the stopper may be resiliently biased to the closed position. For instance, a spring may bias the stopper in the closed position. Accordingly, once a predetermined quantity of an item (e.g., a single stock keeping unit of the item) is dispensed from the container 1000, the stopper may return to the closed position and thereby control dispensed item quantity.

As shown, the stopper 1056 may include a hinged stopper that is rotatable between the closed position and the open position. For instance, the hinged stopper may be hinged at or substantially at the edge of the opening 1004. As such, in the closed position, the stopper is rotated to prevent content from exiting the storage container. As the stopper translates from the closed position to the open position, the stopper rotates to an angle at which content can be released from the stackable container 1000. For instance, the stopper may be rotated substantially 90°. Accordingly, in the open position, the stopper is angled with respect to the plane of the opening.

The stopper 1056 may be translatable in the plane of the opening 1004. In particular, the stopper 1056 may be translatable in at least one direction in the plane of the opening 1004. For instance, the stopper 1056 may be translated in a first, e.g., vertical direction, in the plane of the opening and/or a second, e.g., horizontal direction in the plane of the opening (where the first and second directions may be perpendicular to one another). In an example, at least a component of the stopper 1056 maybe carried by a rail 1058. Therefore, the stopper 1056 may be translated in the first direction by adjusting the position of the rail 1058 in the plane of the opening 1004. Equally, the stopper 1056 may be translated in the second direction by adjusting the position of the stopper along the rail 1058. Translating the stopper in the first direction allows the positioned of the stopper to be adjusted according to differently sized items in the container 1000, thereby enabling a greater flexibility in the types of items that can be dispensed by the vending apparatus. Translating the stopper in the second direction allows items to be selectively dispensed from multiple sections of the container 1000, such as the segregated sections of the storage container described with respect to Fig. 9.

In some examples, the vending apparatus may comprise an actuator to transition the stopper between the closed position and the open position. It is preferable that the storage container 1000 does not include a power source and/or electrical circuitry to allow inexpensive storage container manufacture. Accordingly, the actuator may not be provided as part of the storage container. Rather, the actuator may be provided in the frame of the storage system. Accordingly, when the stopper 1056 is provided in the storage container 1000, the vending apparatus may be arranged to transition the stopper 1056 to the open position via a mechanical engagement between the stopper and the actuator. As one illustrative example, the actuator may be arranged to transition the stopper between the closed position and the open position by rotating the rail 1058.

In some examples the stopper may be arranged to release content from the dispensing storage container in response to a mechanical stimulus. The mechanical stimulus may be provided by a mechanical engagement between the stopper and the actuator. Alternatively, the mechanical stimulus may comprise a kinetic impact on the container which may trigger the vending apparatus to transition the stopper to the open position, and thereby dispense content from the storage container. For instance, the force of depositing the storage container 1000 into a storage column and/or a port column may provide the kinetic impact. Alternatively, the force of depositing a further storage container onto the storage container 1000 may provide the kinetic impact.

Fig. 11 shows a stackable container 1100 with another example vending apparatus 1150. Vending apparatus 1150 shown in Fig. 11 comprises a pusher 1152 and a stopper 1156. In the stackable container shown in Fig. 11, the opening 1104 is disposed in the base of the container.

The pusher 1152 may be as otherwise described with respect to Figs. 10A-10B. As shown, the pusher 1152 of Fig. 11 may be arranged to urge content stored in the container 1100 in a direction substantially parallel to the plane of the opening. As such the pusher is arranged to present the content in line with the opening 1104.

The vending apparatus 1150 of Fig. 11 differs from the vending apparatus 1050 of Fig. 10 in that the stopper 1156 in Fig. 11 comprises a cover 1156 (also referred to as a first cover or a dispensing cover) which is translatable across the opening 1104. By translating the cover 1156 across the opening, the cover 1156 can variably expose the opening when the stopper is in an open position. For instance, to dispense an item, such as item 1106 shown in Fig. 11, the cover 1156 may be rolled back to expose a section of the opening 1104 proximal to the item 1106. In response, the item may be dispensed from the section of the opening 1104. When the opening 1104 is in the base of the container, as in Fig. 11, the item may be dispensed from the section of the opening 1104 under the force of gravity. On the other hand, when the opening 1104 is in the sidewall of the container, a pusher may urge the item out of the opening.

The vending apparatus 1150 of Fig. 11 further comprises a sizing cover 1158 which is disposable at the opening. The sizing cover 1158 is translatable across the opening to set an amount of the opening that is exposable by the dispensing cover 1156. As such, the sizing cover 1158 may be translatable across the opening 1104 in a perpendicular direction to the translation direction of the cover 1156. To set the amount of the opening that is exposable by the cover 1156, the sizing cover 1158 may be rolled back. For instance, the sizing cover 1158 may be rolled back to expose a section of the opening 1104 to the dispensing cover 1156.

To roll back the dispensing cover 1156 and/or the sizing cover 1158, the vending apparatus 1150 may comprise at least one respective actuator. The actuator(s) may comprise a motor which may be arranged to mechanically engage at least one respective roller 1160 coupled to the dispensing cover 1156 and/or the sizing cover 1158. The roller 1160 coupled to the dispensing cover 1156, when actuated by the respective actuator via the mechanical engagement, may transition the dispensing cover 1156 between a closed position and an open position, and to vary the amount of the opening exposed by the dispensing cover 1156 in the open position. The roller 1160 coupled to the sizing cover 1158, when actuated by the respective actuator via the mechanical engagement, may roll the sizing cover 1158 back to expose a section of the opening 1104 to the dispensing cover 1156. As examples, the rollers 1160 may comprise a spool for the respective cover and/or the roller may translate the respective cover linearly across the opening.

In any of the implementations described herein, the vending apparatus may further comprise a sensor for detecting a quantity of content dispensed from the storage container. That is, the sensor is arranged to detect the quantity of content in the portion of content dispensed from the storage container. The content quantity dispensed from the storage container may comprise an integer number of stock keeping units (SKUs) of the content, in which case the sensor may be arranged to detect the integer. A stock keeping unit comprises the minimum unit by which a type of content may be measured in a storage system. The vending apparatus can record the amount of content being dispensed from a dispensing storage container to ensure accurate order fulfilment. Once the quantity of content has been detected, the vending apparatus may communicate the content to a control system of the storage system (such as the control system of Fig. 4). To do this, the vending apparatus may include a transmitter arranged to communicate the amount of dispensed content to a cooperating receiver at the control system. Equally, prior to dispensing the content, the control system may instruct the vending apparatus to dispense a predetermined quantity of content from the dispensing storage container. The sensor may therefore be used to verify whether the quantity of dispensed content matches the predetermined quantity.

As examples, the sensor may comprise any of a weight sensor, an internal storage space occupancy sensor, a counter, and/or a gate sensor. A weight sensor may be arranged to measure the weight of the storage container before and after content is dispensed. The difference of these weights can then be calculated and, based on that calculation and the weight of the content (e.g., the weight of a single SKU of the content), the amount of dispensed content can be determined. An internal storage space occupancy sensor may determine the amount of internal storage space occupied by content, both before and after content is dispensed. Based on the difference in occupied storage space and the size of the content, the amount of dispensed content can be determined. A counter may be arranged to increment in response to an instance of content being dispensed. For instance, if each instance of dispensing content comprises dispensing an integer number of SKUs, the counter may increment to count the dispensed SKUs. As an example, the counter may be arranged to count the number of times a stopper cycles between the closed position and the open position. For instance, the counter may cycle the number of rotations of the hinged stopper described with respect to the storage container of Figs. 10A and 10B. A gate sensor may be arranged to determine the amount of content passing through the opening in the gated face. For instance, the gate sensor may comprise an RFID sensor arranged to detect the passage of corresponding RFID tags in the content through the opening.

Figs. 12A and 12B show a stackable container 1200 suitable for receiving and dispensing irregularly shaped content 1206. As shown, the internal storage space of the stackable container 1200 includes cartridges 1202 for receiving content or items, such as the irregularly shaped content 1206. The irregularly shaped content 1206 may be soft or readily mouldable. Therefore, irregularly shaped content 1206 may vary in shape (e.g., when packed in, or manipulated during dispensing from, a storage container). Example irregularly shaped content 1206 includes textiles such as clothing.

Since irregularly shaped content is readily mouldable, automatically dispensing irregularly shaped content 1206 can face difficulties due to unpredictable variations in content shape. The cartridges 1202 shown in Fig. 12A-12B may allow irregularly shaped content 1206 to be reliably dispensed. For instance, the cartridges may hold the irregularly shaped content 1206 in a suitable position and may provide a channel through which the content can pass to the opening of the gated face. In these examples, dispensing the content may comprise dispensing the content from the cartridge(s) 1202. Alternatively, dispensing the content may comprise dispensing the cartridge(s) 1202 containing the content.

The cartridge(s) 1202 may be disposed in a dispensing storage container 1200 such that an egress of the storage container 1200 is in communication with an egress from the cartridge(s). For instance, the opening of the storage container 1200 may comprise the egress(es) of the cartridge(s) 1202. Accordingly, the vending apparatus may be arranged to automatically dispense content stored in a cartridge of the stackable container 1200 from the egress of the cartridge and the opening of the dispensing storage container.

For instance, Fig. 12B shows an example of a storage container 1200 with cartridges 1202 from which irregularly shaped content can be dispensed. For the purposes of illustration, the vending apparatus shown in Fig. 12B comprises a cover 1256 translatable across the opening 1204 to variably expose the opening 1204 (as indicated by the arrow). In variably exposing the opening, translation of the cover reveals the egress of each cartridge 1202, thereby allowing content to be dispensed therefrom.

### Methods of automatically dispensing contentfrom storage systems

Fig. 13 depicts a flowchart of an example method of automatically dispensing content from an automated storage and retrieval system. The automated storage and retrieval system is as otherwise described herein, particularly with reference to Figs. 5-12B. As described herein, the content may be automatically dispensed by a vending apparatus in the automated storage and retrieval system.

The method starts at step S100 at which a dispensing storage container (such as any of the dispensing storage containers otherwise described herein) is disposed, in the storage system, proximal to a collector. The dispensing storage container may be disposed by a robotic container-handling vehicle of the storage system. The collector may be any means suitable for receiving content dispensed from the dispensing storage container. For instance, the collector may comprise any of a transporter, a dispensing outlet, a receptacle storage container, and/or robotic vehicle. The dispensing storage container may be considered proximal to the collector if the dispensing storage container is positioned to dispense content into the collector. In some implementations, disposing the dispensing storage container in the frame proximal to the collector may comprise orienting the dispensing storage container such that an opening in the dispensing storage container is directed towards the collector.

The method continues to step S105 at which a portion of content stored in the dispensing storage container is automatically dispensed to the collector. For instance, the content may be dispensed into or onto the collector. As used herein, content may be considered automatically dispensed if it is dispensed without direct, manual human involvement, for instance, without manual picking. As an example, human involvement may be limited to user-operation of a control system of the storage system. The content may therefore be automatically dispensed using a vending apparatus, as otherwise described herein.

### Penultimate comments

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

Further, the present disclosure comprises the following clauses:
Clause 1. An automated storage and retrieval system comprising:
   a frame defining a plurality of storage columns for receiving stacks of storage containers; and
   a vending apparatus arranged to automatically dispense a portion of content stored in a dispensing storage container in a first stack of storage containers from an opening of the dispensing storage container.
Clause 2. The automated storage and retrieval system of clause 1, wherein the vending apparatus is disposed to dispense the portion of content from the dispensing storage container when the dispensing storage container is received in a storage column at an edge of the frame.
Clause 3. The automated storage and retrieval system of clause 1 or clause 2, wherein the vending apparatus is disposed to dispense the portion of content from the dispensing storage container when the dispensing storage container is received in an interior zone of the frame.
Clause 4. The automated storage and retrieval system of any previous clause, wherein:
   the frame further defines a port column for transporting a storage container to a port, and
   the vending apparatus is disposed to dispense the portion of content from the dispensing storage container when the dispensing storage container is received in the port column or the port.
Clause 5. The automated storage and retrieval system of any previous clause further comprising a transporter, wherein the vending apparatus is arranged to dispense the portion of the content onto the transporter.
Clause 6. The automated storage and retrieval system of clause 5, wherein the transporter comprises a conveyor, a receptacle storage container, and/or a robotic vehicle.
Clause 7. The automated storage and retrieval system of any previous clause, wherein the vending apparatus is arranged to dispense the portion of the content into a receptacle storage container.
Clause 8. The automated storage and retrieval system of clause 7, wherein the receptacle storage container is disposed in an adjacent stack of storage containers to the first stack of storage containers.
Clause 9. The automated storage and retrieval system of any previous clause, wherein the frame comprises a dispensing outlet and the vending apparatus is arranged to dispense the portion of content through the dispensing outlet.
Clause 10. The automated storage and retrieval system of clause 9, wherein the dispensing outlet is disposed to align with the opening of the dispensing storage container when the dispensing storage container is received in a storage column.
Clause 11. The automated storage and retrieval system of clause 9 or clause 10, wherein the dispensing outlet is positioned at an edge of the frame or inside the frame.
Clause 12. The automated storage and retrieval system of any previous clause, wherein the vending apparatus comprises a pusher arranged to urge the content towards the opening.
Clause 13. The automated storage and retrieval system of clause 12, wherein the pusher comprises one or more of a resilient bias means, a mechanical biaser, a spring, and/or a motor.
Clause 14. The automated storage and retrieval system of any previous clause, wherein the vending apparatus comprises a stopper disposable at the opening for selectively retaining the content in the dispensing storage container, wherein the stopper is transitionable between a closed position and an open position, wherein in the closed position the stopper is arranged to retain the content in the dispensing storage container and in the open position the stopper is arranged to release the content from the dispensing storage container.
Clause 15. The automated storage and retrieval system of clause 14, wherein the vending apparatus comprises an actuator arranged to transition the stopper between the closed position and the open position.
Clause 16. The automated storage and retrieval system of clause 14 or clause 15, wherein the stopper comprises a hinged stopper rotatable between the closed position and the open position.
Clause 17. The automated storage and retrieval system of any of clauses 14-16, wherein the stopper is arranged to release the content from the dispensing storage container in response to a mechanical stimulus.
Clause 18. The automated storage and retrieval system of any of clauses 14-17, wherein the stopper is resiliently biased to the closed position.
Clause 19. The automated storage and retrieval system of any of clauses 14-18, wherein the stopper comprises a first stopper component and a second stopper component, the first stopper component disposed at a different edge of the opening to the second stopper component.
Clause 20. The automated storage and retrieval system of clause 19, wherein the first stopper component is disposed at an opposite edge of the opening to the second stopper component.
Clause 21. The automated storage and retrieval system of any of clauses 14-20, wherein the stopper is translatable in the plane of the opening.
Clause 22. The automated storage and retrieval system of any of clauses 14-21, wherein the stopper comprises a cover, the cover being translatable across the opening to variably expose the opening.
Clause 23. The automated storage and retrieval system of clause 22, wherein the vending apparatus further comprises a sizing cover disposable at the opening, wherein the sizing cover is translatable across the opening to set an amount of the opening for exposure.
Clause 24. The automated storage and retrieval system of any previous clause, wherein the vending apparatus further comprises a sensor arranged to detect a quantity of the content in the portion of content dispensed from the dispensing storage container.
Clause 25. The automated storage and retrieval system of clause 24, wherein the quantity of the content comprises an integer number of stock keeping units of the content, and the sensor is arranged to detect the integer.
Clause 26. The automated storage and retrieval system of any previous clause, wherein the dispensing container comprises at least a component of the vending apparatus.
Clause 27. The automated storage and retrieval system of any previous clause, wherein the portion of content is stored within a cartridge in the dispensing storage container.
Clause 28. A method of dispensing content from the automated storage and retrieval system of any preceding clause, the method comprising:
   disposing a dispensing storage container in the frame proximal to a collector; and
   using the vending apparatus, automatically dispensing a portion of content stored in the dispensing storage container to the collector.
Clause 29. The method of clause 28, wherein disposing the dispensing storage container in the frame proximal to the collector comprises orienting the dispensing storage container such that an opening in the dispensing storage container is directed towards the collector.
Clause 30. A stackable container from which content can be dispensed automatically, the stackable container comprising:
   a plurality of internal surfaces;
   a gated face comprising an opening; and
   an internal storage space formed between the internal surfaces and the gated face, the internal storage space for holding the content in the storage container,
   wherein the opening is an egress from the internal storage space.
Clause 31. The stackable container of clause 30, wherein the gated face comprises a sidewall or a base of the stackable container.
Clause 32. The stackable container of clause 30 or clause 31, wherein the internal storage space comprises a cartridge for storing a portion of the content, wherein the opening is in communication with an egress from the cartridge.

## Claims

1. An automated storage and retrieval system comprising:
a frame defining a plurality of storage columns for receiving stacks of storage containers; and
a vending apparatus arranged to automatically dispense a portion of content stored in a dispensing storage container in a first stack of storage containers from an opening of the dispensing storage container.

2. The automated storage and retrieval system of claim 1, wherein the vending apparatus is disposed to dispense the portion of content from the dispensing storage container when the dispensing storage container is received in a storage column at an edge of the frame.

3. The automated storage and retrieval system of claim 1 or claim 2, wherein the vending apparatus is disposed to dispense the portion of content from the dispensing storage container when the dispensing storage container is received in an interior zone of the frame.

4. The automated storage and retrieval system of any previous claim, wherein:
the frame further defines a port column for transporting a storage container to a port, and
the vending apparatus is disposed to dispense the portion of content from the dispensing storage container when the dispensing storage container is received in the port column or the port.

5. The automated storage and retrieval system of any previous claim further comprising a transporter, wherein the vending apparatus is arranged to dispense the portion of the content onto the transporter.

6. The automated storage and retrieval system of any previous claim, wherein the vending apparatus is arranged to dispense the portion of the content into a receptacle storage container, and wherein the receptacle storage container is disposed in an adjacent stack of storage containers to the first stack of storage containers.

7. The automated storage and retrieval system of any previous claim, wherein the frame comprises a dispensing outlet and the vending apparatus is arranged to dispense the portion of content through the dispensing outlet, and wherein the dispensing outlet is disposed to align with the opening of the dispensing storage container when the dispensing storage container is received in a storage column.

8. The automated storage and retrieval system of any previous claim, wherein the vending apparatus comprises a pusher arranged to urge the content towards the opening.

9. The automated storage and retrieval system of any previous claim, wherein the vending apparatus comprises a stopper disposable at the opening for selectively retaining the content in the dispensing storage container, wherein the stopper is transitionable between a closed position and an open position, wherein in the closed position the stopper is arranged to retain the content in the dispensing storage container and in the open position the stopper is arranged to release the content from the dispensing storage container.

10. The automated storage and retrieval system of claim 9, wherein the stopper comprises a hinged stopper rotatable between the closed position and the open position and/or wherein the stopper is translatable in the plane of the opening.

11. The automated storage and retrieval system of any previous claim, wherein the vending apparatus further comprises a sensor arranged to detect a quantity of the content in the portion of content dispensed from the dispensing storage container, wherein the quantity of the content comprises an integer number of stock keeping units of the content, and the sensor is arranged to detect the integer.

12. The automated storage and retrieval system of any previous claim, wherein the dispensing container comprises at least a component of the vending apparatus.

13. A method of dispensing content from the automated storage and retrieval system of any preceding claim, the method comprising:
disposing a dispensing storage container in the frame proximal to a collector; and
using the vending apparatus, automatically dispensing a portion of content stored in the dispensing storage container to the collector.

14. A stackable container from which content can be automatically dispensed, the stackable container comprising:
a plurality of internal surfaces;
a gated face comprising an opening; and
an internal storage space formed between the internal surfaces and the gated face, the internal storage space for holding the content in the storage container,
wherein the opening is an egress from the internal storage space.

15. The stackable container of claim 14, wherein the internal storage space comprises a cartridge for storing a portion of the content, wherein the opening is in communication with an egress from the cartridge.
